# EUROPÄISCHE PATENTSCHRIFT

(11) **EP 2 179 512 B1**
(45) Veröffentlichungstag und Bekanntmachung des Hinweises auf die Patenterteilung: **28.11.2012**
(21) Anmeldenummer: 08759207.7
(22) Anmeldetag: 12.06.2008
(51) Int. Cl.: H04B 5/00

(54) **VORRICHTUNG ZUR BERÜHRUNGSLOSEN ÜBERTRAGUNG VON LEISTUNG UND EINES DATENSIGNALS**
APPARATUS FOR THE CONTACTLESS TRANSMISSION OF POWER AND OF A DATA SIGNAL
DISPOSITIF DE TRANSMISSION SANS CONTACT DE LA PUISSANCE ET D'UN SIGNAL DE DONNÉES

(30) Priorität: 11.07.2007 DE 102007032643
(43) Veröffentlichungstag der Anmeldung: 28.04.2010
(73) Patentinhaber: SEW-EURODRIVE GmbH & Co. KG, 76646 Bruchsal (DE)
(72) Erfinder: HUA, Zhidong, 76131 Karlsruhe (DE); SIMON, Olaf, 76646 Bruchsal (DE)
(86) Internationale Anmeldenummer: PCT/EP2008/004706
(87) Internationale Veröffentlichungsnummer: WO 2009/006977

(56) Entgegenhaltungen:
- WO-A-2004/090918
- DE-B- 1 284 468

## Beschreibung

Die Erfindung betrifft eine Vorrichtung zur berührungslosen Leistungsübertragung und Datenkommunikation und eine Anlage zur berührungslosen Leistungsübertragung an bewegliche Verbraucher.

Aus der WO2004090918A1 ist ein Kommunikationssystem zur Verwendung mit einem induktiven Leistungsübertragungssystem bekannt, wobei das Kommunikationssystem die Kommunikationssignale auf demselben Kabel wie die Leistung trägt, wobei die Frequenz des Kommunikationssystems größer als die des Leistungssystems ist. Die Signale werden getrennt mit einer Induktivität und einer Kapazität oder keramischen Filtern, die alle auf die höhere Kommunikationsfrequenz abgestimmt sind, behandelt. Aus der WO 2004090918 A1 ist somit eine Kommunikationseinrichtung für Systeme mit induktiver Leistungsversorgung mit den Merkmalen des Oberbegriffs von Anspruch 1 bekannt, bei welcher die Sendeeinheit und die Empfangseinheit identisch sind.

Aus der US 20050087599 A1 ist ein Idenüfikationssystem mit dualen Antennenspulen eines Lesegerätes für das Auslesen von Daten aus einem RFID-Transponder bekannt, bei welchem das magnetische Feld zur Aufladung des Transponders durch Ströme erzeugt wird, die durch zwei im wesentlichen identische, mit entgegengesetzter Phase ausgeführten Antennenspulen erzeugt wird, die in der Nähe des Bereichs eingeordnet sind, in dem die Transponder ausgelesen werden sollen.

Aus der DE 1 284 468 B ist eine Schaltungsanordnung zur gegenseitigen Übertragung von Nachrichten zwischen einer festen Station und einem Schienenfahrzeug oder zwischen zwei Schienenfahrzeugen bekannt, bei der beide Nachrichtenstellen jeweils einen Sender und einen durch Spannungskompensation von dem Sender entkoppelten Empfänger besitzen und die Nachrichtenübertragung über den Stromkreis des Schienenstranges erfolgt, wobei zumindest ein Teil des durch den Sender einer Nachrichtenstelle ausgesandten Stroms durch eine induktiv mit der Schaltung des Empfängers dieser Nachrichtenstelle gekoppelte Zusatzwicklung geführt ist und wobei die Stärke dieses Stroms und/oder der Übertragungsfaktor der induktiven Kopplung derart eingestellt ist, dass die dadurch in dem Empfänger induzierte Spannung die durch die Rückwirkung des Senders über den Schienenstrang in dem Empfänger hervorgerufene Spannung kompensiert.

Der Erfindung liegt die Aufgabe zugrunde, bei einer Anlage zur berührungslosen Leistungsübertragung die Sende- und Empfangseinheit simultan betreibbar einzurichten.

Erfindungsgemäß wird die Aufgabe bei der Vorrichtung zur berührungslosen Leistungsübertragung und Datenkommunikation nach den in Anspruch 1 angegebenen Merkmalen und bei der Anlage zur berührungslosen Leistungsübertragung an bewegliche Verbraucher nach den in Anspruch 6 angegebenen Merkmalen gelöst.

Wichtige Merkmale der Erfindung einer Vorrichtung zur berührungslosen Leistungsübertragung und Datenkommunikation sind in Anspruch 1 angegeben. Insbesondere sind somit Merkmale bei einer Vorrichtung, umfassend eine Pickup-Spule, eine Sendeeinheit, eine Empfangseinheit und einen Verbraucher, dass die Pickup-Spule induktiv an einen Primärleiter gekoppelt ist, an die Pickup-Spule ein Leistungsversorgungs-Kreis und ein Datensignal-Kreis angeschlossen sind, der Leistungsversorgungs-Kreis den Verbraucher umfasst, der Leistungsversorgungs-Kreis mit der Pickup-Spule einen Resonanzkreis bildet, mindestens der Leistungsversorgungs-Kreis und/oder der Datensignal-Kreis einen Frequenzfilter umfassen, die Empfangseinheit an den Datensignal-Kreis gekoppelt ist, die Sendeeinheit derart symmetrisch bezüglich der Ankopplung der Empfangseinheit an den Datensignal-Kreis angeschlossen ist, dass sich Signale der Sendeeinheit in der Empfangseinheit auslöschen. Von Vorteil ist dabei, dass Sendeeinheit und Empfangseinheit zum einen an dieselbe Koppeleinheit, die Pickup-Spule, angeschlossen sind und zum anderen simultan betreibbar sind, ohne dass die Sendeeinheit auf die Empfangseinheit einwirkt. Somit ist einerseits eine kompakte Ausführung der Vorrichtung möglich und andererseits eine Trennschaltung für eingehende Signalen zur Empfangseinheit und ausgehende Signale von der Sendeeinheit verzichtbar. Insbesondere kann, beispielsweise während einer Busarbitration, eine Datenkollision mit Daten anderer Teilnehmer während des Sendevorgangs erkannt werden. Eine Wahl von unterschiedlichen Frequenzbereichen für Senden und Empfangen ist ebenfalls nicht notwendig.

Bei einer vorteilhaften Ausgestaltung ist die Pickup-Spule induktiv an einen Primärleiter gekoppelt und der Verbraucher aus der Pickup-Spule versorgbar, wobei die Sendeeinheit induktiv an die Empfangseinheit gekoppelt und mit der Pickup-Spule verbunden ist. Von Vorteil ist dabei, dass eine Alternative bereitgestellt ist, die eine berührurigslose Leistungsversorgung und Datenkommunikation über dieselbe Koppeleinrichtung erlaubt. Somit ist der Abnehmerkopf eines beweglichen Verbrauchers mit kleinerem Baumaß und geringerem Materialeinsatz fertig bar. Insbesondere sind die Mittel zur Einkopplung von Daten und die Mittel zur Auskopplung des Leistungssignals in ein Teil integriert.

Bei einer vorteilhaften Ausgestaltung ist die Pickup-Spule induktiv an einen Primärleiter gekoppelt und der Verbraucher ist aus der Pickup-Spule versorgt, wobei die Pickup-Spule über eine erste induktive Kopplung und eine zweite induktive Kopplung an die Empfangseinheit gekoppelt ist und die Sendeeinheit über die erste induktive Kopplung und die zweite induktive Kopplung an die Empfangseinheit gekoppelt ist, wobei sich die Signale der Pickup-Spule in den beiden Kopplungen addieren und sich die Signale der Sendeeinheit in den beiden Kopplungen kompensieren. Somit ist eine Vorrichtung bereitgestellt, mit der die Empfangseinheit aus einem physikalischen Prinzip die Signale der Sendeeinheit nicht wahrnimmt. Aufwendige Filter sind verzichtbar.

Bei der Erfindung ist die Pickup-Spule induktiv an einen Primärleiter gekoppelt und der Verbraucher aus der Pickup-Spule versorgt, wobei eine erste Induktivität, eine zweite Induktivität, ein Kompensationsglied und die Pickup-Spule von einer Reihenschaltung umfasst sind, die Sendeeinheit mit einem Anschluss zwischen erster Induktivität und zweiter Induktivität und mit einem zweiten Anschluss zwischen Kompensationsglied und Pickup-Spute angeschtossen ist, die Empfangseinrichtung an eine dritte Induktivität angeschlossen ist und die dritte Induktivität induktiv an die erste Induktivität und die zweite Induktivität gekoppelt ist, wobei erste Induktivität und zweite Induktivität gleichsinnig gewickelt sind.

Bei einer vorteilhaften Ausgestaltung sind erste Induktivität, zweite Induktivität, Kompensationsglied und Pickup-Spule derart aufeinander abgestimmt, dass Signale der Sendeeinheit in der ersten Induktivität und in der zweiten Induktivität jeweils ein Magnetfeld bewirken, wobei sich die beiden Magnetfelder in der dritten Induktivität kompensieren. Von Vorteil ist dabei, dass eine kostengünstige Ausbildung bereitgestellt ist, mit der empfängerseitig die Sendersignale ausgelöscht werden.

Bei einer vorteilhaften Ausgestaltung ist der Verbraucher zu erster und zweiter Induktivität parallel geschaltet. Von Vorteil ist dabei, dass der Verbraucher für den Abgleich von erster und zweiter Induktivität nicht berücksichtigt werden muss.

Bei einer vorteilhaften Ausgestaltung ist das Kompensationsglied identisch zur Pickup-Spute ausgebildet. Von Vorteil ist dabei, dass die Kompensation der Signale der Sendeeinheit In der dritten Induktivität somit in einem großen Frequenzbereich erreicht ist, denn die nichtlineare Frequenzkurve der Pickup-Spule, die insbesondere durch den Kern verursacht wird, wird somit nachgebildet.

Bei einer vorteilhaften Ausgestaltung ist die Pickup-Spule auf einen ferromagnetischen Kern in einem ersten Bereich aufgewickelt, wobei der Kern einen Abschnitt des Primärleiters zumindest teilweise umgibt und das Kompensationsglied eine Spule umfasst, die in einem zweiten Bereich des ferromagnetischen Kerns aufgewickelt ist. Somit ist eine kostengünstige Ausführungsform zur Nachbildung der Frequenzkurve der Pickup-Spule im Kompensationsglied bereitgestellt.

Bei einer vorteilhaften Ausgestaltung ist der Verbraucher zur Pickup-Spule parallel geschaltet. Von Vorteil ist dabei, dass der Strom durch den Verbraucher nicht durch das Kompensationsglied fließen muss.

Bei einer vorteilhaften Ausgestaltung ist das Leistungssignal ein mittelfrequenter Wechselstrom mit einer Frequenz zwischen 10kHz und 100 kHz, insbesondere 25kHz.

Bei einer vorteilhaften Ausgestaltung ist das Leistungssignal dem Primärleiter mit einer Stromstärke von mehr als 10A, insbesondere mehr als 50A, aufgeprägt. Somit Ist eine berührungslose Leistungsversorgung von Antrieben im kW-Bereich durchführbar.

Bei einer vorteilhaften Ausgestaltung liegt das Datensignal in einem Frequenzband, das sich oberhalb der Frequenz des Leistungssignals, insbesondere oberhalb der doppelten Frequenz des Leistungssignals, erstreckt. Von Vorteil ist dabei, dass die Störungen des Datensignals durch das Leistungssignal minimiert sind.

Bei einer vorteilhaften Ausgestaltung ist mindestens ein Frequenzfilter vorgesehen, mit dem das Leistungssignal von den Datensignalen trennbar ist. Somit ist die Zuführung zum Verbraucher für das Datensignal sperrbar. Vorzugsweise ist ein Bandpassfilter in der Masche oder dem Leistungssignal-Kreis des Verbrauchers angeordnet, wobei die Mittenfrequenz des Bandpassfilters auf die Frequenz des Leistungssignals im Primärleiter abgestimmt ist. Eine Störung der Datenübertragung durch Effekte am Verbraucher ist somit vermieden. Weiter wird im Verbraucher nicht unnötig Energie verbraucht, die zur Datenkommunikation vorgesehen war. Die Datenübertragung ist folglich mit geringeren Sendeteistungen durchführbar.

Wichtige Merkmale einer Anwendung der Erfindung bei einem Verfahren zur Übermittlung eines Datensignals an eine bewegliche Verbrauchereinheit, wobei die Verbrauchereinheit über eine induktive, resonante Kopplung berührungslos aus einem Primärleiter versorgt wird, sind, dass das Datensignal in den Primärleiter eingespeist wird, das Datensignal in dem beweglichen Verbraucher ein Signal induziert und das im beweglichen Verbraucher induzierte Signal über eine induktive Kopplung in der Verbrauchereinheit an eine Empfangseinheit übermittelt wird. Die Verbrauchereinheit umfasst vorzugsweise einen Verbraucher, beispielsweise einen elektrischen Antrieb, und eine Koppeleinrichtung. Von Vorteil ist dabei, dass Datensignal und Leistungssignal über ein gemeinsames Medium übertragbar sind. Durch die induktive Ankopplung der Empfangseinheit in der Verbrauchereinheit ist die Zwischenschaltung einer Sendeeinheit ermöglicht, die sich im Betrieb mit der Empfangseinheit nicht stört.

Wichtige Merkmale einer Anwendung der Erfindung bei einem Verfahren zur Übermittlung eines Datensignals von eine ersten bewegliche Verbrauchereinheit an eine stationären Empfangstation oder an eine weitere bewegliche Verbrauchereinheit, wobei die erste Verbrauchereinheit über eine induktive, resonante Kopplung berührungslos aus einem Primärleiter versorgt wird und die Empfangsstation an den Primärteiter gekoppelt ist. sind, dass eine Sendeeinheit das Datensignal in zwei Induktivitäten in der ersten Verbrauchereinheit einspeist, wobei jede Induktivität induktiv mit einer Empfangseinheit gekoppelt ist, das in eine Induktivität eingespeiste Datensignal an die Pickup-Spule übermittelt wird, das an die Pickup-Spule übermittelte Datensignal im Primärleiter ein Signal induziert, das im Primärleiter induzierte Signal von der Empfangsstation oder von der weiteren beweglichen Verbrauchereinheit detektiert wird. Von Vorteil ist, dass ein Übersprechen der Sendesignate in die Empfangseinheit innerhalb ein und derselben Verbrauchereinheit verhindert ist ohne den Einsatz von unterschiedlichen Frequenzbändern für Senden und Empfangen oder den Einsatz von Filtertechnik oder die Zuteilung von Zeitabschnitten für Senden und Empfangen. Es ist somit eine Fehlerüberwachung durchführbar, wobei der Rückgriff auf Rückmeldungen und/oder Empfangsbestätigungen verzichtbar ist.

Bei einer vorteilhaften Ausgestaltung kompensieren sich die von den zwei Induktivitäten über die jeweilige Kopplung an die Empfangseinheit übermittelten Signale gegenseitig. Von Vorteil ist dabei, dass Datensignale, die vom Primärleiter in die Verbrauchereinheit eingekoppelt werden, ohne aufwendige Schaltung unterscheidbar sind von Datensignalen, die von der Verbrauchereinheit selber erzeugt werden. Insbesondere ist durch die Verbrauchereinheit erkennbar, ob am Primärleiter in einem Zeitabschnitt einer Bustaktung ein anderes Datensignal anliegt als das von der Verbrauchereinheit eingekoppelte. Beispielsweise soll von der Verbrauchereinheit ein Low-Pegel eingekoppelt werden, und am Primärleiter liegt ein High-Pegel an. Die Verbrauchereinheit kann somit während des Sendevorgangs feststellen, dass eine Datenkollision vorliegt. Oder es soll im Mehrfrequenzirägerverfahren ein High-Pegel auf einem Frequenzkanal eingekoppelt werden, und es liegt am Primärleiter ein High-Pegel auf anderen Frequenzkanälen an. Diese Situationen können mit der Erfindung ohne apparativen Aufwand erkannt werden.

Wichtige Merkmale der Erfindung einer Anlage zur berührungslosen Leistungsübertragung an bewegliche Verbrauchereinheiten, wobei über einen Primärleiter zur berührungslosen Leistungsübertragung eine Datenkommunikation erfolgt, sind in Anspruch 6 angegeben. Insbesondere ist vorgesehen, dass die Verbrauchereinheiten jeweils eine Sendeeinheit und eine Empfangseinheit aufweisen, wobei die Sendeeinheit derart symmetrisch an die Empfangseinheit gekoppelt ist, dass sich an der Empfangseinheit die Signale der Sendeeinheit auslöschen. Somit ist eine Datenkommunikation mittels eines Busprotokolls, insbesondere die Erkennung von Buskollisionen und die Durchführung eines Arbitrierungsverfahrens, durchführbar.

Bei einer vorteilhaften Ausgestaltung sind Empfangseinheit und Sendeeinheit an eine Spule gekoppelt, die induktiv mit dem Primärleiter gekoppelt sind. Vorzugsweise ist die Spule die Pickup-Spule zur Leistungsaufnahme aus dem Primärleiter. Somit ist eine Datenkommunikation über das System zur berührungslosen Leistungsversorgung durchführbar, wobei sogar die Koppelelemente der berührungslosen Leistungsversorgung nutzbar sind für die Datenkommunikation.

Bei einer vorteilhaften Ausgestaltung umfasst das Busprotokoll der Datenkommunikation ein Arbitrierungsverfahren. Somit kann vorteilhaft ein Busteilnehmer zu Beginn einer Datenkommunikation eine Identifizierung auf den Bus modulieren und gleichzeitig den Bus abhören und so weitere, ebenfalls sendende Busteilnehmer erkennen und im Falle einer niedrigeren, eigenen Priorität das Senden abbrechen. Vorteilhaft ist somit eine erfindungsgemäße Anlage mit einem CAN-Bus betrieben. Auch Buskollisionen in anderen Bussystemen sind somit erkennbar und eine Kollisionsvermeidung ist durchführbar.

### Bezugszeichenliste

1 Primarleiter
2 Generator
3 Abnehmer
4 Pickup-Spule
5 Sendespule
6 Empfangsspule
10 Sendeeinheit
11 Empfangseinheit
12 Verbraucher
13 Induktivität
14 Induktivität
15 Induktivität
16 Koppelkern
17 WicKlungsodentierung
18 Wicklungsorientierung
19 Trennkondensator
20 Abnehmer
21 Kapazität
22 Induktivität
23 Kompensationsglied
24 Kern
25 Trennkondensator
30 Spule
31 Kern
40 Hinleiter
41 Rückleiter
42 Pickup-Spule
43 Kompensationsspule
44 E-förmiger Spulenkern

Die Erfindung wird nun anhand von Abbildungen näher erläutert:

Es zeigt
- Figur 1 eine Vorrichtung zur berührungslosen Leistungsversorgung nach dem Stand der Technik,
- Figur 2 eine erfindungsgemäße Vorrichtung zur berührungslosen Leistungsversorgung,

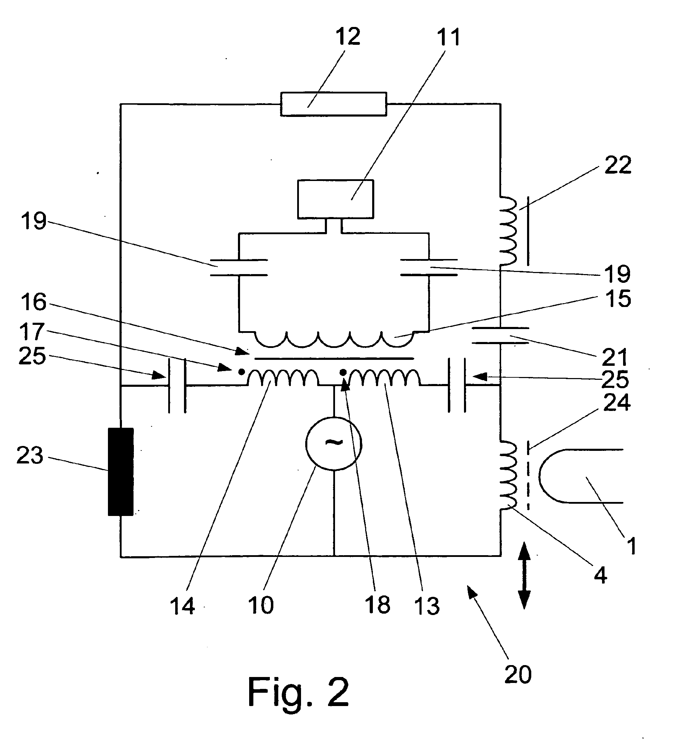

- Figur 2 eine weitere erfindungsgemäße Vorrichtung zur berührungslosen Leistungsversorgung,

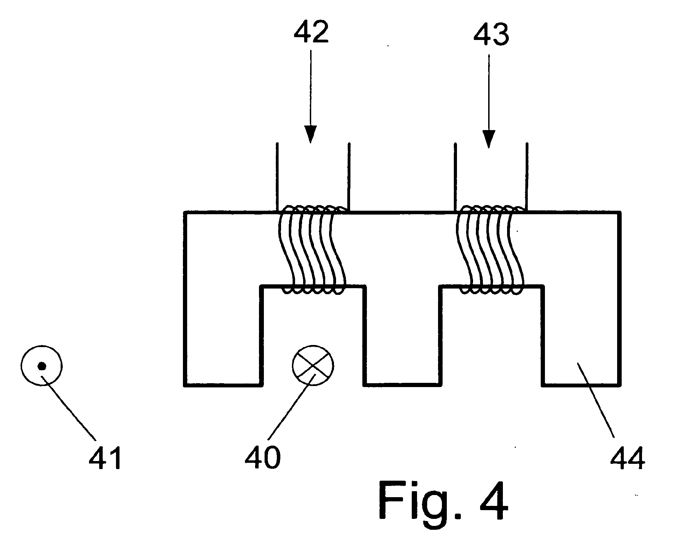

- Figur 4 eine Pickup-Spule mit Kompensationsglied einer erfindungsgemäßen Vorrichtung zur berührungslosen Leistungsversorgung.

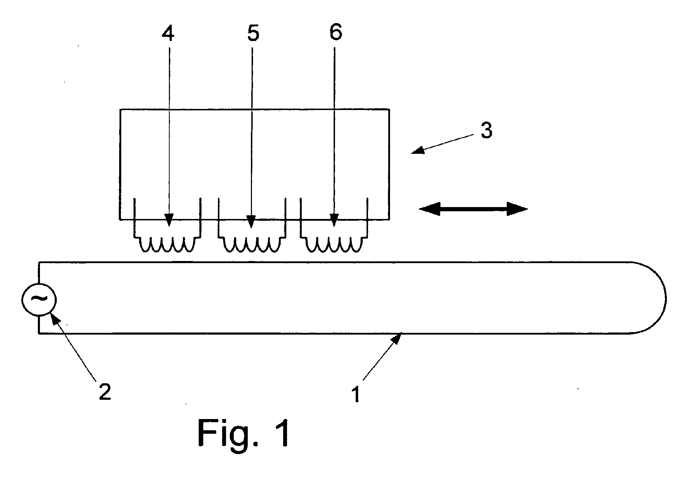

In Figur 1 ist ein langgestreckter Primärleiter 1 gezeigt, in den ein Generator 2 einen mittelfrequenten Wechselstrom mit im Wesentlichen konstanter Frequenz und konstanter Amplitude einspeist. Vorzugsweise wird eine Frequenz zwischen 10 kHz und 100KHz eingesetzt.

An den Primärleiter 1 ist ein Abnehmer 3 gekoppelt. Der Abnehmer 3 umfasst eine Pickup-Spule 4, über die induktiv Leistung aus dem Primärleiter 1 entnehmbar Ist zur Versorgung eines Verbrauchers, Die Pickup-Spule 4 ist hierzu im Abnehmer 3 durch ein kapazitives Element zu einem Resonanzkreis ergänzt, dessen Resonanzfrequenz auf die Frequenz des eingespeisten Primärleiterstroms abgestimmt ist. Das kapazitive Element ist durch mindestens einen Kondensator realisiert, der in Reihe oder parallel zur Pickup-Spule 4 geschaltet Ist.

Der Abnehmer 3 ist entlang des langgestreckten Primärleiters 1 verfahrbar, wie dies durch einen Pfeil angedeutet ist.

Der Abnehmer 3 umfasst weiter eine Sendespule 5, die an eine Sendeeinheit angeschlossen ist, und eine Empfangsspule 6, die an eine Empfangseinheit angeschlossen ist. Die Sendespule 5 moduliert auf den Primärleiter 1 Datensignale auf, während die Empfangsspute 6 Datensignale erfasst, die von weiteren Sendespulen auf den Primärleiter 1 moduliert werden. Das für die Datensignale verwendete Frequenzband liegt oberhalb der Frequenz des Signals der Leistungsversorgung.

Sendespule 5 und Empfangsspule 6 sind voneinander getrennt und von der Pickup-Spule 4 getrennt ausgeführt, um eine wechselseitige Störung zu vermeiden.

Figur 2 zeigt das Blockschaltbild eines Abnehmers 20 einer erfindungsgemäßen Vorrichtung zur berührungslosen Leistungsversorgung.

Eine Pickup-Spule 4 ist induktiv an einen Primärleiter 1 gekoppelt. Die Pickup-Spule 4 versorgt einen Verbraucher 12. Zur Kopplung an den Primärleiter 1 sind am Verbraucher 12 Mittel vorgesehen, um die Pickup-Spule 4 zu einem Resonanzkreis zu ergänzen, dessen Resonanzfrequenz auf die konstante Frequenz des Leistungssignals im Primärleiter 1 abgestimmt ist. Die Frequenz des Leistungssignals liegt vorzugsweise zwischen 10kHz und 100 kHz. Insbesondere ist mindestens ein Anpassnetzwerk, ein Kondensator oder eine andere Kapazität parallel oder in Reihe zur Pickup-Spule 4 geschaltet zur Bildung des Resonanzkreises.

Der Abnehmer 3 ist entlang des langgestreckten Primärleiters 1 verfahrbar, wie dies in Figur 1 durch einen Pfeil angedeutet ist.

Der Abnehmer 20 umfasst eine Empfangseinheit 11, die über eine erste Induktivität 13, eine zweite Induktivität 14 und eine dritte Induktivität 15 induktiv an die Pickup-Spule 4 gekoppelt ist. Die erste Induktivität 13 und die zweite Induktivität 14 sind dabei gleichsinnig gewickelt. Somit bewirkt ein Strom, der von der Pickup-Spule 4 durch die erste Induktivität 13 und die zweite Induktivität 14 fließt, ein Magnetfeld in der dritten Induktivität 15, wobei die von erster und zweiter Induktivität bewirkten Beiträge sich konstruktiv ergänzen.

Ein auf den mittelfrequenten Strom aufmoduliertes Datensignal im Primärleiter 1 wird somit von der Pickup-Spule 4 erfasst und bewirkt einen Stromimpuls, der zumindest teilweise durch die erste Induktivität 13 und die zweite Induktivität 14 fließt. Dieses Datensignal wird von einem weiteren Teilnehmer, der an den Primärleiter induktiv oder galvanisch angeschlossen ist, aufmoduliert. Die erste Induktivität 13 und die zweite Induktivität 14 induzieren jeweils ein Signal in der dritten Induktivität 15. Die Induktivitäten sind so miteinander gekoppelt, dass sich beide Signale verstärken. Das resultierende Signal wird von einer Empfangseinheit 11 detektiert, die über Trennkondensatoren 19 zur Filterung von Störsignalen an die dritte Induktivität 15 angeschlossen ist. Vorzugsweise ist die induktive Kopplung der Empfangseinheit 11 an die Pickup-Spule 4 durch einen in die Induktivitäten 13, 14, 15 eingeschobenen oder einen mit diesen auf andere Weise verbundenen ferromagnetischen Kern verbessert.

Der Verbraucher 12 ist Ober einen Bandpassfilter an die Pickup-Spule 4 angeschlossen, der aus einer Kapazität 21 und einer Induktivität 22 aufgebaut ist. Der Bandpassfilter wirkt somit als Frequenzfilter, dessen Mittenfrequenz auf die Frequenz des Leistungssignals abgestimmt. Das Datensignal wird somit gesperrt.

In Reihe zu der ersten Induktivität 13 und der zweiten Induktivität 14 sind in Weiterbildung jeweils Trennkondensatoren 25 geschaltet, die das Leistungssignal sperren, Datensignale jedoch durchlassen. Somit fließt das Leistungssignal nicht durch die Induktivitäten 13, 14. Die Trennkondensatoren 25 wirken somit als Frequenzfilter, insbesondere als Hochpassfilter. In Weiterbildungen sind kompliziertere Hochpassfilter höherer Ordnung eingesetzt.

Für die Datensignale wird eine Trägerfrequenz verwendet, die oberhalb der Frequenz des Leistungssignals liegt. Somit gelangen die Datensignale im Abnehmer nicht zum Verbraucher 12, sondern an die Induktivitäten 13 und 14.

Soll von dem Abnehmer ein Datensignal an den Primärteiter 1 zur Kommunikation mit einem weiteren Kommunikationsteilnehmer übermittelt werden, so generiert die Sendeeinheit 10 einen Stromimpuls der sich auf die erste Induktivität 13 und die zweite Induktivität 14 aufteilt.

Zur Festlegung des Teilungsverhältnisses ist ein Kompensationsglied 23 vorgesehen. Dieses Kompensationsglied ist vorzugsweise als Spule ausgebildet und bildet die Induktivität und/oder den komplexen Widerstand der Pickup-Spule 4 nach. Hierzu verhalten sich die Windungen der ersten Induktivität 13 und der zweiten Induktivität 14 zueinander umgekehrt wie die komplexen Widerstände der Pickup-Spule 4 und des Kompensationsglieds 23. Somit bewirkt ein Strom, der von der Sendeeinheit erzeugt wird, in der ersten Induktivität 13 und in der zweiten Induktivität 14 jeweils ein Magnetfeld, wobei sich die Magnetfelder in der dritten Induktivität 15 gerade kompensieren. Hierzu sind die Induktivitäten 13 und 14 gleichsinnig gewickelt, die resultierenden Magnetfelder in den Spulenachsen der Induktivitäten antiparallel. Durch die Kompensation reagiert die Empfangseinheit 11 nicht sensitiv auf die Signale der Signaleinheit 10, obwohl letztere in den Kreis der Pickup-Spule 4 Signale einspeist und erstere die Pickup-Spule 4 überwacht. Diese Abtrennung der Sende-Signale wird durch die zweite Einkopplung in der Kreis der Empfangseinheit 11 erreicht, die über die zweite Kopplung zwischen zweiter Induktivität 14 und dritter Induktivität 15 eingerichtet ist.

Vorzugsweise ist eine derartige Trennung von Sende- und Empfangssignalen bei BusSystemen einsetzbar, die ein Arbitrierungsverfahren einsetzen, beispielsweise CAN-Bus. Hie kann ein Teilnehmer mit dem Senden der Authentifizierung beginnen und während des Sendens den Bus auf Kollisionen überwachen.

Pickup-Spule 4, Kapazität 21, Induktivität 22, Verbraucher 12 und Kompensationsglied 23 bilden somit einen Leistungsversorgungskreis zur Leistungsversorgung des Verbrauchers 12.

Pickup-Spule 4, Trennkondensatoren 25, Induktivitäten 13, 14 und Kompensationsglied 23 bilden somit einen Datensignal-Kreis zur Übermittlung von Datensignalen von der Pickup-Spule 4 an die induktiv angekoppelte Empfangseinheit 11 und von der symmetrisch zur Empfangseinheit 11 angeschlossenen Sendeeinheit 10 an die Pickup-Spule 4. Ein Vorteil der Erfindung besteht darin, dass der symmetrische Anschluss der Sendeeinheit 10 bezüglich der Ankopplung der Empfangseinheit 11, der durch die Dimensionierung der zweiten Induktivität 14 und des Kompensationsgliedes 23 im Vergleich zu der Dimensionierung der ersten Induktivität 13 und der durch die Pickup-Spule 4 gegebenen Induktivität bewirkt ist, eine Auslöschung der Signale von der Sendeeinheit 10 in der dritten Induktivität 15 erfolgt. Ein Übersprechen von Signalen der Sendeeinheit 10 in die Empfangseinheit 11 wird also sicher vermieden, ohne dass eine aufwendige Abschaltung der Empfangseinheit 11 während des Sendens oder umgekehrt nötig wäre.

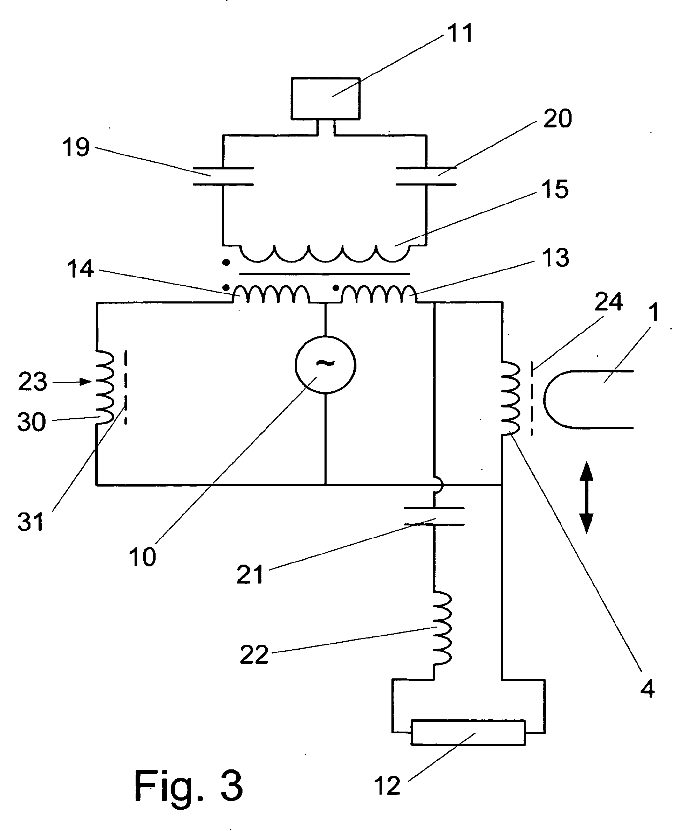

Figur 3 zeigt das Blockschaltbild eines weiteren erfindungsgemäßen Ausfuhrungsbeispiels.

Der Verbraucher 12 ist hier parallel zur Pickup-Spule 4 geschaltet, während in Figur 2 der Verbraucher 12 parallel zu der Reihenschaltung der ersten Induktivität 13 und der zweiten Induktivität 14 geschaltet ist.

Somit muss der Verbraucherstrom, der von der Pickup-Spule 4 aufgenommen und dem Verbraucher zugeführt wird, nicht durch das Kompensationsglied 23 fließen. Hierdurch sind die ohmschen Verluste verringert.

Das Kompensationsglied 23 umfasst eine Spule 30 mit einem Kern 31. Die Spule 30 und der Kern 31 sind so dimensioniert, dass die Pickup-Spule 4 mit dem Kern 24 kompensiert werden, damit sich die Signale von der Sendeeinheit 10 in der dritten Induktivität 15 gerade aufheben und nicht von der Empfangseinheit 11 wahrnehmbar sind. Die Spule 30 weist einen Kern 31 auf, um der nichtlinearen Kennlinie der Pickup-Spule 4, die ihrerseits durch Sättigungseffekte im ferromagnetischen Material der Kerns 24 hervorgerufen wird, möglichst nahe zu kommen. Somit ist eine möglichst genaue Nachbildung der Schleife aus Sendeeinheit 10 und Pickup-Spule 4 durch die Schleife aus Sendeeinheit 10 und Kompensationsglied 23 erreicht, um ein gegenseitiges Aufheben der jeweilig induzierten Signale in der dritten Induktivität 15 zu bewirken.

Die Parallelschaltung des Verbrauchers 12 zu der Reihenschaltung der ersten Induktivität 13 mit der zweiten Induktivität 14 hat gegenüber der Variante nach Figur 3 den Vorteil, dass zur Dimensionierung des Kompensationsglieds 23 nicht noch der Verbraucher 12 berücksichtigt werden muss. Somit ist die Kompensation der Sende-Signale in der dritten Induktivität 15 verbessert bewirkt.

Alternativ formen eine Kapazität 21 und eine Induktivität 22 einen Bandpass, der für die Signale der Sendeeinheit 10 undurchlässig ist. Hierdurch ist eine Berücksichtigung des Verbrauchers im Kompensationsglied in der Variante nach Figur 3 verzichtbar. Die Güte und die Breite des Bandpasses sind durch weitere Kapazitäten, Induktivitäten und Widerstände verbesserbar beziehungsweise vergrößerbar.

Figur 4 zeigt eine einfache Variante eines Kompensationsglieds.

Ein Primärleiter umfasst einen Hinleiter 40 und einen Rückleiter 41. An den Hinleiter 40 ist eine Pickup-Spule 42 induktiv gekoppelt, wobei die Pickup-Spule 42 auf einen ferromagnetischen Kern 44 aufgewickelt ist, der den Hinleiter 40 U-förmig abschnittsweise umschließt. Der Kern 44 ist somit entlang des Hinleiters 40 verschiebbar, ohne dass sich die Kopplung zwischen Hinleiter 40 und Pickup-Spule 42 verändert.

Der ferromagnetische Kern 44 ist als E-förmiger Spulenkern ausgebildet, auf dessen zweiten U-förmigen Anteil eine weitere Spule 43 aufgewickelt ist, die als Kompensations-Spule 43 vom Kompensationsglied 23 umfasst wird.

Somit ist ein separater Kern für die Induktivität des Kompensationsglieds 23 verzichtbar, und es ist ein herkömmlicher E-förmiger Spulenkern verwendbar.

Bei einem weiteren Ausführungsbeispiel ist die Pickup-Spule 4 auf einen E-förmigen Kern aufgewickelt, dessen Schenkel sowohl Hinleiter 40 als auch Rückleiter 41 jeweils U-förmig umfassen. Der E-förmige Kern weist einen zusätzlichen Abschnitt auf, in dem die Kompensationsspule des Kompensationsglieds 23 aufgewickelt ist.

In den beschriebenen Fällen ist die Wicklung des Kompensationsgliedes 43 daher so angeordnet, dass die magnetischen Feldlinien, die vom Primärleiter 40 erzeugt werden und die durch den ferromagnetischen Kern 44 geführt werden, im wesentlichen, also bis auf geringe Anteile wie Streufelder, nicht durch diese Wicklung verlaufen. Hierdurch ist das Kompensationsglied 43 wesentlich schwächer als die Wicklung der Pickup-Spule 42, praktisch im wesentlichen gar nicht, an den Primärleiter 40 induktiv gekoppelt.

## Patentansprüche

1. Vorrichtung zur berührungslosen Leistungsübertragung und Datenkommunikation, umfassend eine Pickup-Spule (4), eine Sendeeinheit (10), eine Empfangseinheit (11) und einen Verbraucher,
wobei
i) die Pickup-Spule (4) induktiv an einen Primärleiter (1) gekoppelt ist,
ii) an die Pickup-Spule (4) ein Leistungsversorgungs-Kreis und ein Datensignal-Kreis angeschlossen sind,
iii) der Leistungsversorgungs-Kreis den Verbraucher (12) umfasst,
iv) der Leistungsversorgungs-Kreis mit der Pickup-Spule (4) einen Resonanzkreis bildet,
v) mindestens der Leistungsversorgungs-Kreis und/oder der Datensignal-Kreis einen Frequenzfilter umfassen,
vi) die Empfangseinheit (11) an den Datensignal-Kreis gekoppelt ist,
**dadurch gekennzeichnet, dass**
vii) die Sendeeinheit (10) derart symmetrisch bezüglich der Ankopplung der Empfangseinheit (11) an den Datensignal-Kreis angeschlossen ist, dass sich Signale der Sendeeinheit (10) in der Empfangseinheit (11) auslöschen,
viii) die Sendeeinheit (10) und die Empfangseinheit (11) zum einen an die Pickup-Spule (4) angeschlossen sind und zum anderen simultan betreibbar sind, ohne dass die Sendeeinheit (10) auf die Empfangseinheit (11) einwirkt,
ix) eine erste Induktivität (13, 14), eine zweite Induktivität (13, 14), ein Kompensationsglied (23) und die Pickup-Spule (4) von einer Reihenschaltung umfasst sind,
x) die Sendeeinheit (10) mit einem Anschluss zwischen erster Induktivität (13, 14) und zweiter Induktivität (13, 14) und mit einem zweiten Anschluss zwischen Kompensationsglied (23) und Pickup-Spule (4) angeschlossen ist,
xi) die Empfangseinheit (11) an eine dritte Induktivität (15) angeschlossen ist und
xii) die dritte Induktivität (15) induktiv an die erste Induktivität (13, 14) und die zweite Induktivität (13, 14) gekoppelt ist, wobei erste Induktivität (13, 14) und zweite Induktivität (13, 14) gleichsinnig gewickelt sind.

2. Vorrichtung nach Anspruch 1,
**dadurch gekennzeichnet, dass**
erste Induktivität (13, 14), zweite Induktivität (13, 14), Kompensationsglied (23) und Pickup-Spule (4) derart aufeinander abgestimmt sind, dass Signale der Sendeeinheit (10) in der ersten Induktivität (13, 14) und in der zweiten Induktivität (13, 14) jeweils ein Magnetfeld bewirken, wobei sich die beiden Magnetfelder in der dritten Induktivität (15) kompensieren und/oder
der Verbraucher (12) zu erster und zweiter Induktivität (13, 14) parallel geschaltet ist und/oder
das Kompensationsglied (23) identisch zur Pickup-Spule (4) ausgebildet ist und/oder
die Pickup-Spule (4) auf einen ferromagnetischen Kern (44) in einem ersten Bereich aufgewickelt ist, wobei der Kern einen Abschnitt des Primärleiters (1) zumindest teilweise umgibt, und das Kompensationsglied (23) eine Spule (43) umfasst, die in einem zweiten Bereich des ferromagnetischen Kerns (44) aufgewickelt ist
und/oder
der Verbraucher (12) zur Pickup-Spule (4) parallel geschaltet ist.

3. Vorrichtung nach einem der Ansprüche 1 oder 2,
**dadurch gekennzeichnet, dass**
das Leistungssignal ein mittelfrequenter Wechselstrom mit einer Frequenz zwischen 10kHz und 100 kHz ist
und/oder
das Leistungssignal dem Primärleiter (1) mit einer Stromstärke von mehr als 10A aufgeprägt ist
und/oder
Leistungssignal und Datensignal gleichzeitig über den Primärleiter (1) übertragbar und/oder aus diesem entnehmbar sind.

4. Vorrichtung nach einem der Ansprüche 1 bis 3,
**dadurch gekennzeichnet, dass**
das Datensignal in einem Frequenzband liegt, das sich oberhalb der Frequenz des Leistungssignals erstreckt
und/oder
mindestens ein Frequenzfilter vorgesehen ist, mit dem das Leistungssignal von den Datensignalen trennbar ist
und/oder
ein Bandpassfilter in der Masche oder dem Leistungssignal-Kreis des Verbrauchers (12) angeordnet ist, wobei die Mittenfrequenz des Bandpassfilters auf die Frequenz des Leisturtgssignals im Primärleiter (1) abgestimmt ist.

5. Vorrichtung nach einem der Ansprüche 1 bis 4,
**dadurch gekennzeichnet, dass**
durch das Kompensationsglied (23) die Induktivität der Pickup-Spule (4) nachgebildet ist und/oder
Kompensationsglied (23) und Pickup-Spule (4) auf einen gemeinsamen Kern aufgewickeit sind
und/oder
dass das Kompensationsglied (23) schwächer als die Pickup-Spule (4) an den Primärleiter (1) induktiv gekoppelt ist.

6. Anlage zur berührungslosen Leistungsübertragung an bewegliche Verbraucher (12), wobei über einen Primärleiter (1) zur berührungslosen Leistungsübertragung eine Datenkommunikation erfolgt,
**dadurch gekennzeichnet, dass**
eine Vorrichtung nach einem der Ansprüche 1 bis 5 ausgebildet ist.

7. Anlage nach Anspruch 6,
**dadurch gekennzeichnet, dass**
das Busprotokoll der Datenkommunikation ein Arbitrierungsverfahren umfasst.

## Claims

1. Apparatus for contactless power transmission and data communication, comprising a pickup coil (4), a transmission unit (10), a reception unit (11) and a load,
i) the pickup coil (4) being inductively coupled to a primary conductor (1),
ii) a power supply circuit and a data signal circuit being connected to the pickup coil (4),
iii) the power supply circuit comprising the load (12),
iv) the power supply circuit forming a resonant circuit with the pickup coil (4),
v) at least the power supply circuit and/or the data signal circuit comprising a frequency filter,
vi) the reception unit (11) being coupled to the data signal circuit,
**characterised in that**
vii) the transmission unit (10) is connected in such symmetrical fashion with respect to the coupling of the reception unit (11) to the data signal circuit that signals of the transmission unit (10) cancel each other out in the reception unit (11),
viii) the transmission unit (10) and the reception unit (11), on the one hand, are connected to the pickup coil (4) and, on the other hand, are simultaneously operable without the transmission unit (10) acting on the reception unit (11),
ix) a first inductor (13, 14), a second inductor (13, 14), a compensating element (23) and the pickup coil (4) comprise a series circuit,
x) the transmission unit (10) is connected by one terminal located between first inductor (13, 14) and second inductor (13, 14) and by a second terminal located between compensating element (23) and pickup coil (4),
xi) the reception unit (11) is connected to a third inductor (15) and
xii) the third inductor (15) is inductively coupled to the first inductor (13, 14) and the second inductor (13, 14), first inductor (13, 14) and second inductor (13, 14) being wound in the same direction.

2. Apparatus according to Claim 1,
**characterised in that**
first inductor (13, 14), second inductor (13, 14), compensating element (23) and pickup coil (4) are matched in such a manner to one another that signals of the transmission unit (10) cause a magnetic field both in the first inductor (13, 14) and in the second inductor (13, 14), the two magnetic fields compensating each other in the third inductor (15)
and/or
the load (12) is connected in parallel with first and second inductor (13, 14)
and/or
the compensating element (23) is formed identically to the pickup coil (4)
and/or
the pickup coil (4) is wound on a ferromagnetic core (44) in a first region, the core at least partly surrounding a section of the primary conductor (1), and the compensating element (23) comprising a coil (43) which is wound in a second region of the ferromagnetic core (44) and/or
the load (12) is connected in parallel with the pickup coil (4).

3. Apparatus according to one of Claims 1 or 2,
**characterised in that**
the power signal is a medium-frequency alternating current with a frequency of between 10 kHz and 100 kHz and/or
the power signal is impressed on the primary conductor (1) with an amperage of more than 10 A and/or
power signal and data signal are simultaneously transmittable via and/or drawable from the primary conductor (1).

4. Apparatus according to one of Claims 1 to 3,
**characterised in that**
the data signal lies in a frequency band extending above the frequency of the power signal and/or
at least one frequency filter is provided, by which the power signal is separable from the data signals and/or
a band-pass filter is arranged in the mesh or the power signal circuit of the load (12), the centre frequency of the band-pass filter being tuned to the frequency of the power signal in the primary conductor (1).

5. Apparatus according to one of Claims 1 to 4,
**characterised in that**
the inductance of the pickup coil (4) is emulated by the compensating element (23)
and/or
compensating element (23) and pickup coil (4) are wound onto a common core
and/or
**in that** the compensating element (23) is inductively coupled to the primary conductor (1) more weakly than the pickup coil (4).

6. Installation for contactless power transmission to movable loads (12),
a data communication taking place via a primary conductor (1) for contactless power transmission,
**characterised in that**
an apparatus is configured according to one of Claims 1 to 5.

7. Installation according to Claim 6,
**characterised in that**
the bus protocol of the data communication comprises an arbitration method.

## Revendications

1. Dispositif de transmission de puissance et de communication de données sans contact, comprenant une bobine de pick-up (ou détectrice) (4), une unité émettrice (10), une unité réceptrice (11) et un consommateur,
dans lequel
i) la bobine de pick-up (4) est couplée par induction à un conducteur primaire (1),
ii) un circuit d'alimentation en puissance et un circuit de signal de données sont connectés à la bobine de pick-up (4),
iii) le circuit d'alimentation en puissance comprend le consommateur (12),
iv) le circuit d'alimentation en puissance forme avec la bobine de pick-up (4) un circuit résonnant,
v) au moins le circuit d'alimentation en puissance et/ou le circuit de signal de données comprennent un filtre de fréquence,
vi) l'unité réceptrice (11) est couplée au circuit de signal de données, **caractérisé en ce que**
vii) l'unité émettrice (10) est connectée au circuit de signal de données de manière symétrique par rapport au couplage de l'unité réceptrice (11), de sorte que les signaux de l'unité émettrice (10) s'annulent dans l'unité réceptrice (11),
viii) l'unité émettrice (10) et l'unité réceptrice (11) sont connectées d'une part à la bobine de pick-up (4) et, d'autre part, peuvent fonctionner simultanément sans que l'unité émettrice (10) influe sur l'unité réceptrice (11),
ix) une première inductance (13, 14), une deuxième inductance (13, 14), un élément de compensation (23) et la bobine de pick-up (4) sont compris dans un montage en série,
x) l'unité émettrice (10) est connectée par une connexion entre la première inductance (13, 14) et la deuxième inductance (13, 14) et par une deuxième connexion entre l'élément de compensation (23) et la bobine de pick-up (4),
xi) l'unité réceptrice (11) est connectée à une troisième inductance (15) et
xii) la troisième inductance (15) est couplée par induction à la première inductance (13, 14) et à la deuxième inductance (13, 14), la première inductance (13, 14) et la deuxième inductance (13, 14) étant bobinées dans le même sens.

2. Dispositif selon la revendication 1,
**caractérisé en ce que**
la première inductance (13, 14), la deuxième inductance (13, 14), l'élément de compensation (23) et la bobine de pick-up (4) sont accordés les uns aux autres de telle manière que les signaux de l'unité émettrice (10) dans la première inductance (13, 14) et dans la deuxième inductance (13, 14) génèrent un champ magnétique respectif, les deux champs magnétiques se compensant dans la troisième inductance (15) et/ou
le consommateur (12) est monté en parallèle sur la première et la deuxième inductance (13,14)
et/ou
l'élément de compensation (23) est conçu de manière identique à la bobine de pick-up (4)
et/ou
la bobine de pick-up (4) est enroulée sur un noyau ferromagnétique (44) dans une première région, le noyau entourant au moins partiellement une portion du conducteur primaire (1), et l'élément de compensation (23) comprend une bobine (43) qui est enroulée dans une deuxième région du noyau ferromagnétique (44) et/ou
le consommateur (12) est monté en parallèle sur la bobine de pick-up (4),

3. Dispositif selon une des revendications 1 ou 2,
**caractérisé en ce que**
le signal de puissance est un courant alternatif à moyenne fréquence d'une fréquence comprise entre 10 kHz et 100 kHz
et/ou
le signal de puissance est appliqué au conducteur primaire (1) avec une intensité de plus de 10 A
et/ou
signal de puissance et signal de données peuvent être transmis simultanément via le conducteur primaire (1) et/ou prélevés simultanément de celui-ci.

4. Dispositif selon une des revendications 1 à 3,
**caractérisé en ce que**
le signal de données se situe dans une bande de fréquences qui s'étend au-dessus de la fréquence du signal de puissance
et/ou
il est prévu au moins un filtre de fréquence qui permet de séparer le signal de puissance des signaux de données
et/ou
un filtre passe-bande est disposé dans la maille ou le circuit du signal de puissance du consommateur (12), la fréquence centrale du filtre passe-bande étant accordée à la fréquence du signal de puissance dans le conducteur primaire (1).

5. Dispositif selon une des revendications 1 à 4,
**caractérisé en ce que**
l'élément de compensation (23) reproduit l'inductance de la bobine de pick-up (4) et/ou
l'élément de compensation (23) et la bobine de pick-up (4) sont enroulés sur un noyau commun
et/ou
l'élément de compensation (23) est couplé par induction au conducteur primaire (1) plus faiblement que la bobine de pick-up (4).

6. Installation de transmission de puissance sans contact à des consommateurs mobiles (12), dans laquelle une communication de données a lieu via un conducteur primaire (1) servant à la transmission de puissance sans contact,
**caractérisée en ce que**
un dispositif est conçu selon une des revendications 1 à 5.

7. Installation selon la revendication 6,
**caractérisée en ce que**
le protocole de bus de la communication de données comprend un procédé d'arbitrage.
